# EUROPÄISCHE PATENTANMELDUNG

(11) **EP 4 718 039 A2**
(43) Veröffentlichungstag der Anmeldung: **01.04.2026**
(21) Anmeldenummer: 26158738.0
(22) Anmeldetag: 22.09.2022
(51) Int. Cl.: G01F 1/667

(54) **ULTRASCHALLSENSOR FÜR EIN ULTRASCHALL-MESSGERÄT UND ULTRASCHALL-MESSGERÄT**

(30) Priorität: 29.10.2021 DE 102021128380
(62) Teilanmeldung aus: 22782518.9
(71) Anmelder: Endress+Hauser Flowtec AG, 4153 Reinach (CH)
(72) Erfinder: Ueberschlag, Pierre, 68300 Saint-Louis (FR)
(74) Vertreter: Endress + Hauser Group Services (Deutschland) AG+Co. KG

(57) **Zusammenfassung**

Die Erfindung betrifft einen Ultraschallsensor (10) für ein Ultraschall-Messgerät (1) umfassend:
Eine Wandleranordnung (11) zum Erzeugen und Erfassen von Ultraschallsignalen mit mindestens einem Piezoelement (11.1), wobei das mindestens eine Piezoelement mittels Elektroden (11.3) dazu eingerichtet ist zwischen elektrischen Signalen und Ultraschallsignalen sowie umgekehrt zu wandeln;
einen Koppelkörper (12) zum Übertragen der Ultraschallsignale zwischen einer ersten Seitenfläche (12.1) und einer zweiten Seitenfläche (12.2) des Koppelkörpers, wobei auf der ersten Seitenfläche mindestens ein Piezoelement angeordnet ist,
wobei die Wandleranordnung (11) einen Anordnungsamplitudengang aufweist,
wobei der Anordnungsamplitudengang aus zumindest zwei teilweise überlappenden Teilamplitudengängen (30) zusammengesetzt ist,
wobei unterschiedliche, hinsichtlich ihrer Frequenzbereiche benachbarte Teilamplitudengänge bezüglich ihrer Zentralfrequenzen (32) einen Maximalabstand von einem Mittelwert ihrer Bandbreiten multipliziert mit einem Faktor F aufweisen,
wobei F höchstens 2, und wobei F mindestens 0.2,
dadurch gekennzeichnet, dass das Piezoelement scheibenförmig ist und abschnittsweise eine erste Dicke aufweist, und wobei das Piezoelement abschnittsweise eine zweite Dicke aufweist,
wobei eine Seitenfläche (11.101) des Piezoelements eben ist und mit der ersten Seitenfläche des Koppelkörpers akustisch gekoppelt ist,
wobei das Piezoelement (11.1) in einem Zentralbereich (11.102) eine Vertiefung aufweist.

## Beschreibung

Die Erfindung betrifft einen Ultraschallsensor für ein Ultraschall-Messgerät und ein solches Ultraschall-Messgerät zum Messen mindestens einer Messgröße.

Ultraschallsensoren sind in verschiedenen Ausführungen bekannt. Beispielsweise werden Sensoren über Koppelkörper mit einer Wandung eines Behältnisses akustisch und mechanisch gekoppelt, um Ultraschallsignale in das Behältnis einzustrahlen, siehe beispielsweise die DE102017130976A1. Es ist dabei zu berücksichtigen, dass Ultraschallsignale in ihrer Frequenz beispielsweise an eine Wandstärke der Wandung angepasst sein müssen.

Üblicherweise werden für verschiedene Wandungen von Behältnissen verschiedene Sensoren vorgehalten.

Aufgabe der Erfindung ist es, einen Ultraschallsensor vorzuschlagen, welcher flexibel und robust einsetzbar ist.

Die Aufgabe wird gelöst durch einen Ultraschallsensor gemäß dem unabhängigen Anspruch 1 sowie durch ein Ultraschall-Messgerät gemäß dem unabhängigen Anspruch 8.

Ein erfindungsgemäßer Ultraschallsensor für ein Ultraschall-Messgerät zum Messen mindestens einer Messgröße umfasst:
Eine Wandleranordnung zum Erzeugen und Erfassen von Ultraschallsignalen mit mindestens einem Piezoelement, wobei das mindestens eine Piezoelement mittels Elektroden dazu eingerichtet ist zwischen elektrischen Signalen und Ultraschallsignalen sowie umgekehrt zu wandeln;
einen Koppelkörper zum Übertragen der Ultraschallsignale zwischen einer ersten Seitenfläche und einer zweiten Seitenfläche des Koppelkörpers, wobei auf der ersten Seitenfläche mindestens ein Piezoelement angeordnet ist,
wobei die Wandleranordnung einen Anordnungsamplitudengang aufweist,
wobei
der Anordnungsamplitudengang aus zumindest zwei teilweise überlappenden Teilamplitudengängen zusammengesetzt ist, welche Teilamplitudengänge jeweils eine Bandbreite bemessen durch eine Halbwertsbreite sowie eine Zentralfrequenz aufweisen,
wobei unterschiedliche, hinsichtlich ihrer Frequenzbereiche benachbarte Teilamplitudengänge bezüglich ihrer Zentralfrequenzen einen Maximalabstand von einem Mittelwert ihrer Bandbreiten multipliziert mit einem Faktor F aufweisen,
wobei F höchstens 2, und wobei F insbesondere höchstens 1.5, und wobei F bevorzugt höchstens 1,
und wobei F mindestens 0.2, und wobei F insbesondere mindestens 0.4, und wobei F bevorzugt mindestens 0.5.

Ein Amplitudengang beschreibt dabei einen frequenzabhängigen Zusammenhang zwischen Amplituden eines elektrischen Signals und Amplituden eines Ultraschallsignals und gibt somit einen Hinweis auf einen Einsatzbereich einer Wandleranordnung an. Große Werte eines Amplitudengangs entsprechen dabei einer guten Wandlungseffizienz zwischen elektrischen Signalen und Ultraschallsignalen.

Durch die Überlappung mehrerer Teilamplitudengänge bei einem Anordnungsamplitudengang kann ein nutzbarer Frequenzbereich eines Ultraschallsensors erweitert werden. Auf diese Weise kann der Ultraschallsensor flexibel und robust bei verschiedenen Behältnissen angewandt werden. Ein Anwender kann somit für viele Anwendungen ein Ultraschallsignal passend zu einer Wandung eines Behältnisses wie beispielsweise ein Messrohr wählen, ohne an eine Einsatzgrenze des Ultraschallsensors zu geraten und diesen wechseln zu müssen. Der Sensor wird dazu über seine zweite Seitenfläche mit dem Behältnis akustisch und mechanisch gekoppelt.

Mittels der Elektroden kann bei Anlegen einer elektrischen, zeitlich variierenden Spannung der Piezoeffekt ausgenutzt werden, um das zugehörige Piezoelement zum Schwingen anzuregen. Auf diese Weise können Ultraschallsignale erzeugt werden. Umgekehrt führen von außen aufgeprägte Schwingungen dazu, dass das Piezoelement interne elektrische Spannungen erzeugt, welche durch die Elektroden als Messsignal abgegriffen werden können. Auf diese Weise können Ultraschallsignale erfasst werden.

In einer Ausgestaltung weist die Wandleranordnung mindestens zwei Piezoelemente auf, wobei zumindest zwei Piezoelemente der mindestens zwei Piezoelemente jeweils einen unterschiedlichen Piezoamplitudengang aufweisen. Auf diese Weise kann die Planung und Herstellung der Wandleranordnung vereinfacht werden.

In einer Ausgestaltung weist ein Piezoelement einen Piezoamplitudengang auf,
welcher Piezoamplitudengang aus zumindest zwei überlappenden Teilamplitudengängen zusammengesetzt ist, welche Teilamplitudengänge jeweils eine Bandbreite bemessen durch eine Halbwertsbreite sowie eine Zentralfrequenz aufweisen,
wobei unterschiedliche benachbarte Teilamplitudengänge bezüglich ihrer Zentralfrequenzen einen Maximalabstand von einem Mittelwert ihrer Bandbreiten multipliziert mit einem Faktor F aufweisen,
wobei F höchstens 2, und wobei F insbesondere höchstens 1.

Erfindungsgemäß ist das Piezoelement scheibenförmig und weist abschnittsweise eine erste Dicke auf, wobei das Piezoelement abschnittsweise eine zweite Dicke aufweist,
wobei eine Seitenfläche des Piezoelements eben ist und mit der ersten Seitenfläche des Koppelkörpers akustisch gekoppelt ist.

Auf diese Weise kann eine Justierung mehrerer Piezoelemente zueinander vermieden werden.

Eine Resonanzfrequenz von einem Piezoelement ist wesentlich durch seine geometrischen Abmessungen und insbesondere durch seine Dicke bestimmt.

Erfindungsgemäß weist das Piezoelement in einem Zentralbereich eine Vertiefung auf.

In einer Ausgestaltung gehören die Teilamplitudengänge zu jeweils unterschiedlichen Elektrodenpaaren.

Ein erfindungsgemäßes Ultraschall-Messgerät zum Messen mindestens einer Messgröße umfasst:
Zumindest einen erfindungsgemäßen Ultraschallsensor,
eine elektronische Mess-/Betriebsschaltung zum Betreiben des mindestens einen Ultraschallsensors sowie zum Bereitstellen von Messwerten der mindestens einen Messgröße.

Im Folgenden wird die Erfindung anhand von Ausführungsbeispielen beschrieben.
Figs. 1 a) und b) zeigen einen beispielhaften erfindungsgemäßen Ultraschallsensor aus verschiedenen Ansichten;
Figs. 2 a) bis c) zeigen beispielhafte erfindungsgemäße Wandleranordnungen;
Fig. 3 zeigt beispielhafte Teilamplitudengänge;
Fig. 4 zeigt beispielhafte Ultraschall-Messgeräte.

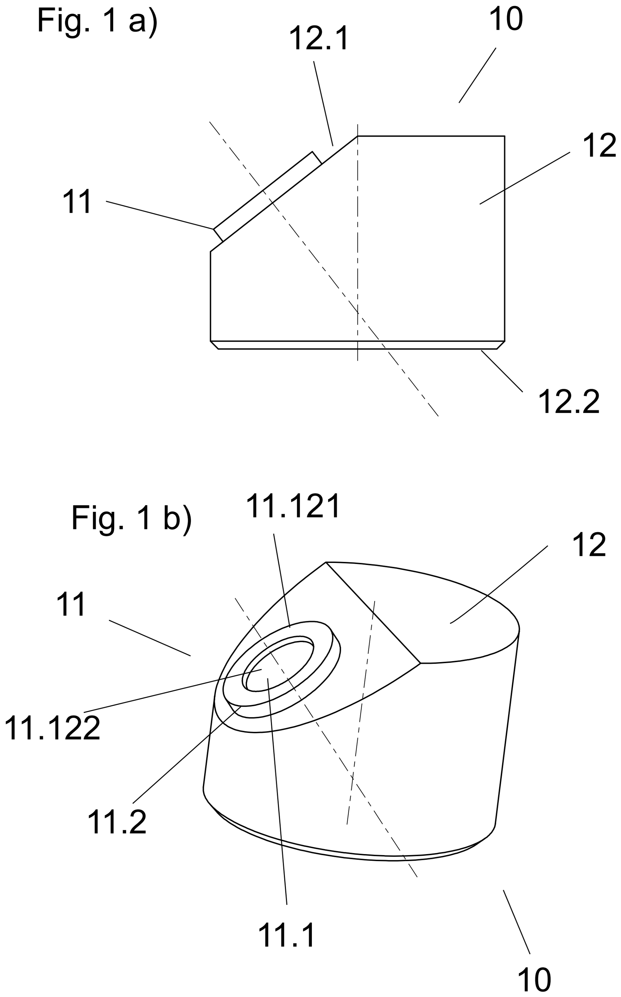

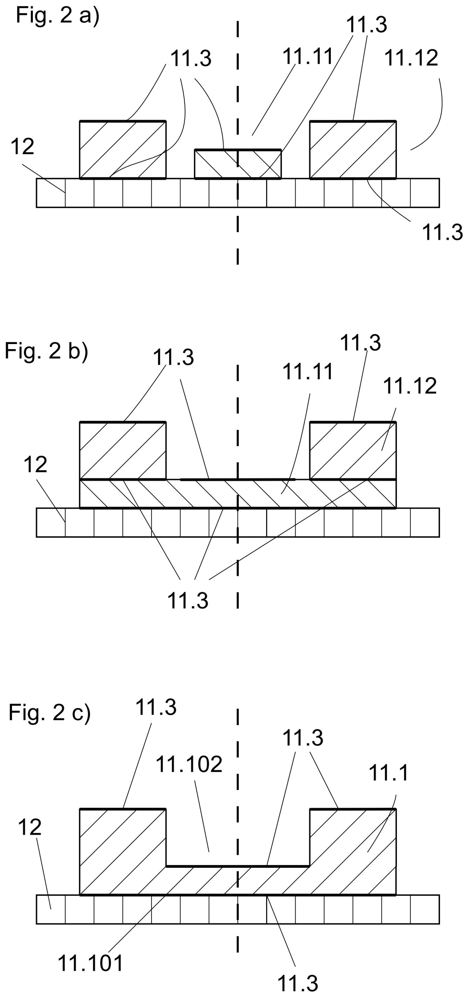

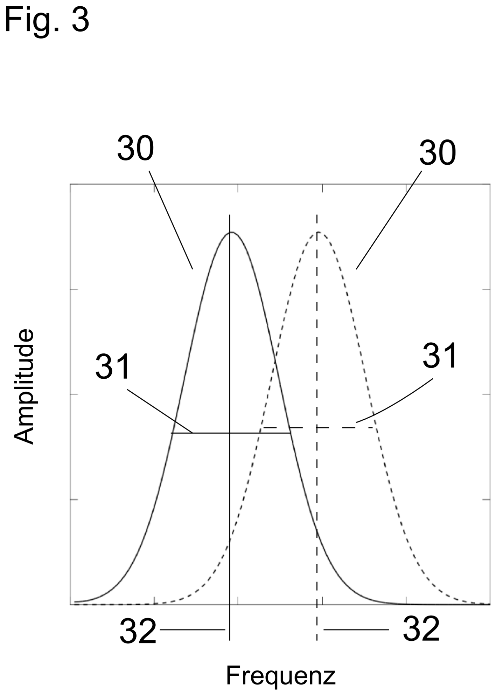

Fig. 1 a) zeigt eine Seitenansicht auf einen beispielhaften erfindungsgemäßen Ultraschallsensor 10 mit einer Wandleranordnung 11, welche auf einer ersten Seitenfläche 12.1 eines Koppelkörpers 12 angeordnet und mit diesem akustisch gekoppelt ist. Erfindungsgemäß weist die Wandleranordnung 11 einen Anordnungsamplitudengang auf, welcher aus zumindest zwei überlappenden Teilamplitudengängen zusammengesetzt ist, siehe dazu Figs. 2 a) bis c) und Fig. 3 b). Ein Anordnungsamplitudengang beschreibt dabei einen frequenzabhängigen Zusammenhang zwischen Amplituden eines elektrischen Signals und Amplituden eines Ultraschallsignals und gibt somit einen Hinweis auf einen Einsatzbereich einer Wandleranordnung an. Große Werte des Anordnungsamplitudengangs entsprechen dabei einer guten Wandlungseffizienz zwischen elektrischen Signalen und Ultraschallsignalen.

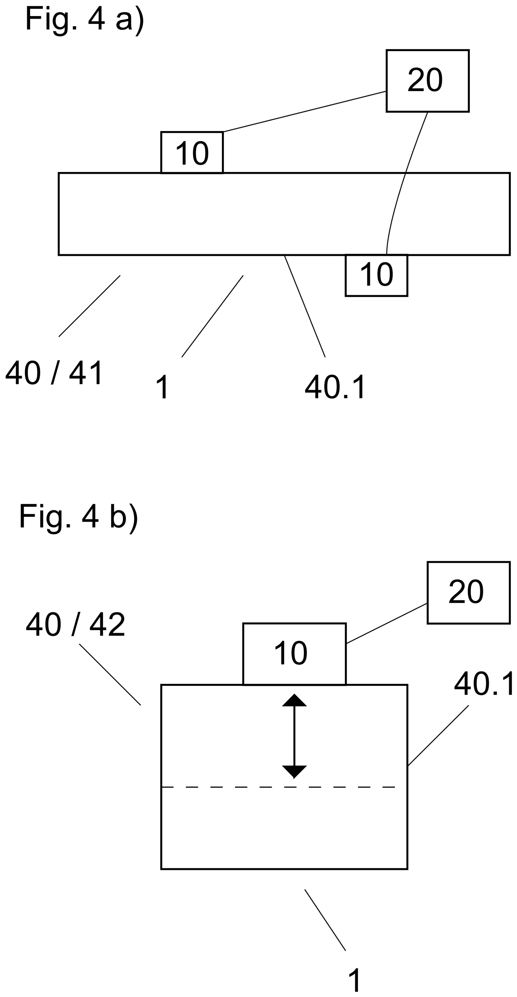

Der Koppelkörper weist eine zweite Seitenfläche 12.2 auf, welche dazu eingerichtet ist, mit einer Wandung 40.1 eines Behältnisses 40, siehe Figs. 4 a) und 4 b), akustisch gekoppelt zu werden. Das Behältnis kann beispielsweise ein Messrohr oder ein Tank beispielsweise für ein Fluid wie beispielsweise eine Flüssigkeit sein. Fig. 1 b) zeigt eine Schrägansicht auf den in Fig. 1 a) gezeigten Ultraschallsensor, wobei die Wandleranordnung 11 beispielhaft ein scheibenförmiges erstes Piezoelement 11.1 und ein ringförmiges zweites Piezoelement 11.2 mit einem Ringbereich 11.121 aufweist, wobei das erste Piezoelement koaxial in einem Zentralbereich 11.122 des zweiten Piezoelements angeordnet ist, wobei die beiden Piezoelemente unterschiedliche Anordnungsamplitudengänge aufweisen.

Figs. 2 a), b) und c) skizzieren beispielhafte erfindungsgemäße Wandleranordnungen 11, mittels welchen ein erfindungsgemäßer Anordnungsamplitudengang eingerichtet werden kann. Die hier gezeigten Beispiele sind nicht beschränkend auszulegen.

Fig. 2 a) zeigt einen Querschnitt durch eine Wandleranordnung wie in Fig. 1 b) gezeigt, wobei ein scheibenförmiges erstes Piezoelement 11.11 in einem Zentralbereich eines ringförmigen zweiten Piezoelements 11.12 angeordnet ist. Eine Resonanzfrequenz von einem Piezoelement ist wesentlich durch seine geometrischen Abmessungen und insbesondere durch seine Dicke bestimmt. Je dicker ein Piezoelement ist, desto tiefer ist seine Resonanzfrequenz. Wie hier gezeigt kann beispielsweise das zweite Piezoelement 11.12 eine größere Dicke aufweisen als das zentrale erste Piezoelement, so dass das zweite Piezoelement eine tiefere Resonanzfrequenz aufweist.

Beispielsweise dadurch kann erreicht werden, dass ein Anordnungsamplitudengang der Wandleranordnung 11 aus verschiedenen, sich überlappenden Amplitudengängen zusammengesetzt ist, welche Amplitudengänge jeweils zu einem Piezoelement gehören. Beide Piezoelemente sind mit dem Koppelkörper 12 akustisch und mechanisch gekoppelt. Mittels Elektroden 11.3 können einerseits die Piezoelemente zu Schwingungen angeregt werden sowie von außen aufgeprägte Schwingungen erfasst werden.

Beispielsweise kann der Anordnungsamplitudengang durch weitere ringförmige Piezoelemente erweitert werden, welche konzentrisch um das hier gezeigte zweite Piezoelement 11.12 herum angeordnet werden. Beispielsweise kann das hier gezeigte scheibenförmige erste Piezoelement alternativ auch ringförmig sein.

Da eine Ultraschallabstrahlcharakteristik durch ein Verhältnis Wellenlänge eines Ultraschallsignals zu Durchmesser eines entsprechenden Piezoelements gekennzeichnet ist, können als Nebeneffekt Abstrahlcharakteristiken verschiedener Piezoelemente einer Wandleranordnung aufeinander abgestimmt werden.

Fig. 2 b) zeigt eine alternative erfindungsgemäße Wandleranordnung, wobei das ringförmige zweite Piezoelement 11.12 auf dem scheibenförmigen ersten Piezoelement 11.11 gelagert ist. Hier steht das erste Piezoelement 11.11 in Kontakt mit dem Koppelkörper 12. Wie in Fig. 2 a) weisen beide Piezoelemente unterschiedliche Dicken auf, damit ein Anordnungsamplitudengang der Wandleranordnung aus verschiedenen, sich überlappenden Teilamplitudengängen zusammengesetzt ist. Auch weisen die Piezoelemente Elektroden 11.3 auf, um Schwingungen zu erzeugen und zu erfassen.

Fig. 2 c) zeigt eine weitere erfindungsgemäße Ausgestaltung, bei welcher ein erstes Piezoelement 11.1 scheibenförmig ausgestaltet ist und in einem Zentralbereich eine Verjüngung aufweist. Durch die beispielhafte hier gezeigte Anordnung der Elektroden 11.3 in Kombination mit der geometrischen Ausgestaltung weist das erste Piezoelement einen Piezoamplitudengang aus verschiedenen, sich überlappenden Teilamplitudengängen auf, welche jeweils zu unterschiedlichen Elektrodenpaaren gehören.

Fig. 3 skizziert beispielhafte, schematische Teilamplitudengänge 30 beispielsweise von zwei Piezoelementen, wobei die vertikale Achse eine frequenzabhängige Amplitude und die horizontale Achse beispielsweise eine Anregungsfrequenz wiedergibt. Das durchgezogene Frequenzspektrum ist etwas tieffrequenter als das gestrichelte Frequenzspektrum. Beide Teilamplitudengänge weisen jeweils eine Halbwertsbreite 31 und jeweils eine Zentralfrequenz 32 auf und überlappen sich. Die Teilamplitudengänge können sich wie hier dargestellt ähneln oder auch unterschiedlich sein. In der Praxis sind solche Teilamplitudengänge deutlich weniger glatt, Fig. 3 weist ausschließlich erläuternden Charakter auf.

Erfindungsgemäß weisen unterschiedliche, hinsichtlich ihrer Frequenzbereiche benachbarte Teilamplitudengänge bezüglich ihrer Zentralfrequenzen einen Maximalabstand von einem Mittelwert ihrer Bandbreiten multipliziert mit einem Faktor F auf, wobei F höchstens 2, und wobei F insbesondere höchstens 1.5, und wobei F bevorzugt höchstens 1, und wobei F mindestens 0.2, und wobei F insbesondere mindestens 0.4, und wobei F bevorzugt mindestens 0.5.

Durch eine Obergrenze von F wird ein Maximalabstand definiert, durch eine Untergrenze von F ein Mindestabstand. So wird ein lückenloser Anordnungsamplitudengang durch wenige verschiedene Piezoelemente konstruiert.

Der durchgezogene Teilamplitudengang gehört hierbei zu einem Piezoelement mit einer größeren Dicke (Figs. 2 a), b) bzw. zu einem Elektrodenpaar mit größerem Abstand (Fig. 2 c)), der gestrichelte Teilamplitudengang entsprechend zu einem Piezoelement mit einer geringeren Dicke (Figs. 2 a), b) bzw. zu einem Elektrodenpaar mit geringerem Abstand (Fig. 2 c)).

Bei den in Figs. 2 a) bis c) dargestellten Wandleranordnungen ist ein zugehöriger Anordnungsamplitudengang erweitert, so dass in einem größeren Frequenzbereich als bei üblichen Wandleranordnungen Ultraschallsignale effizient erzeugt und erfasst werden können. Je nach Verschaltung der Piezoelemente zu einer Wandleranordnung setzt sich ein Anordnungsamplitudengang einer erfindungsgemäßen Wandleranordnung somit beispielsweise im Wesentlichen aus Teilamplitudengängen von einzelnen Piezoelementen zusammen bzw. entspricht deren Summe.

Beispielsweise kann ein einzelnes Piezoelement einen Piezoamplitudengang aufweisen, welcher Piezoamplitudengang aus zumindest zwei überlappenden Teilamplitudengängen 30 zusammengesetzt ist, welche Teilamplitudengänge jeweils eine Bandbreite 31 bemessen durch eine Halbwertsbreite sowie eine Zentralfrequenz 32 aufweisen. Dies kann beispielsweise mittels eines Piezoelements entsprechend Fig. 2 c) umgesetzt werden.

Erfindungsgemäß weisen unterschiedliche, hinsichtlich ihrer Frequenzbereiche benachbarte Teilamplitudengänge bezüglich ihrer Zentralfrequenzen 32 einen Maximalabstand von einem Mittelwert ihrer Bandbreiten multipliziert mit einem Faktor F auf, wobei F höchstens 2, und wobei F insbesondere höchstens 1. Auf diese Weise ist sichergestellt, dass eine Wandleranordnung in einem zusammenhängenden Frequenzbereich und nicht in mehreren voneinander getrennten Frequenzbereich wirkt. Figs. 4 a) und b) skizzieren beispielhafte Ultraschall-Messgeräte 1 mit mindestens einem erfindungsgemäßen Ultraschallsensor 10 und einer elektronischen Mess-/Betriebsschaltung 20 zum Betreiben des mindestens einen Ultraschallsensors sowie zum Bereitstellen von Messwerten mindestens einer Messgröße. Der mindestens eine Ultraschallsensor 10 ist an einer Außenseite einer Wandung 40.1 eines Behältnisses 40 angebracht und ist dazu eingerichtet, Ultraschallsignale in das Behältnis einzustrahlen und aus dem Behältnis austretende Ultraschallsignale zu empfangen.

Fig. 4 a) skizziert ein beispielhaftes Ultraschall-Durchflussmessgerät 1.1 nach dem Laufzeit-Differenzen-Messprinzip, wobei eine Laufzeitdifferenz von Ultraschallsignalen zwischen zwei erfindungsgemäßen Ultraschallsensoren 10 in und gegen Strömungsrichtung eines durch ein Messrohr 41 strömenden Mediums dazu herangezogen wird, eine Strömungsgeschwindigkeit zu bestimmen.

Fig. 4 b) skizziert ein Ultraschall-Füllstandmessgerät 1.2, bei welchem ein Füllstand eines Mediums in einem Tank 42 über eine Ultraschallsignallaufzeit von einem vom Ultraschallsensor 10 ausgestrahlten, an einer Grenzfläche des Mediums teilreflektierten und wieder empfangenen Ultraschallsignals gemessen wird.

Damit Ultraschallsignale eine Wandung eines Behältnisses gut durchdringen können, muss ein Ultraschallsignalspektrum an die Wandung angepasst sein. Erfindungsgemäße Wandleranordnungen sind in der Lage mit Ultraschallsignale in einem weiten Frequenzbereich zu erzeugen und zu erfassen, so dass ein Anwender bei Wechsel eines Behältnisses 40 keinen Wechsel der Ultraschallsensoren durchführen muss. Auf diese Weise kann ein erfindungsgemäßes Ultraschallmessgerät vielfältig eingesetzt und somit Kosten gespart werden.

### Bezugszeichenliste

- 1: Ultraschall-Messgerät
- 1.1: Ultraschall-Durchflussmessgerät
- 1.2: Ultraschall-Füllstandsmessgerät
- 10: Ultraschallsensor
- 11: Wandleranordnung
- 11.1: Piezoelement
- 11.101: Seitenfläche
- 11.102: Zentralbereich
- 11.11: erstes Piezoelement
- 11.12: zweites Piezoelement
- 11.121: Ringbereich
- 11.122: Zentralbereich
- 11.3: Elektrode
- 12: Koppelkörper
- 12.1: erste Seitenfläche
- 12.2: zweite Seitenfläche
- 20: elektronische Mess-/Betriebsschaltung
- 30: Teilamplitudengang
- 31: Bandbreite
- 32: Zentralfrequenz
- 40: Behältnis
- 40.1: Wandung
- 41: Messrohr
- 42: Tank

## Patentansprüche

1. Ultraschallsensor (10) für ein Ultraschall-Messgerät (1) umfassend:
Eine Wandleranordnung (11) zum Erzeugen und Erfassen von Ultraschallsignalen mit mindestens einem Piezoelement (11.1), wobei das mindestens eine Piezoelement mittels Elektroden (11.3) dazu eingerichtet ist zwischen elektrischen Signalen und Ultraschallsignalen sowie umgekehrt zu wandeln;
einen Koppelkörper (12) zum Übertragen der Ultraschallsignale zwischen einer ersten Seitenfläche (12.1) und einer zweiten Seitenfläche (12.2) des Koppelkörpers, wobei auf der ersten Seitenfläche mindestens ein Piezoelement angeordnet ist,
wobei die Wandleranordnung einen Anordnungsamplitudengang aufweist,
**dadurch gekennzeichnet, dass**
der Anordnungsamplitudengang aus zumindest zwei teilweise überlappenden Teilamplitudengängen (30) zusammengesetzt ist, welche Teilamplitudengänge jeweils eine Bandbreite (31) bemessen durch eine Halbwertsbreite sowie eine Zentralfrequenz (32) aufweisen,
wobei unterschiedliche, hinsichtlich ihrer Frequenzbereiche benachbarte Teilamplitudengänge bezüglich ihrer Zentralfrequenzen (32) einen Maximalabstand von einem Mittelwert ihrer Bandbreiten multipliziert mit einem Faktor F aufweisen,
wobei F höchstens 2, und wobei F insbesondere höchstens 1.5, und wobei F bevorzugt höchstens 1,
und wobei F mindestens 0.2, und wobei F insbesondere mindestens 0.4, und wobei F bevorzugt mindestens 0.5,
**dadurch gekennzeichnet, dass** das Piezoelement scheibenförmig ist und abschnittsweise eine erste Dicke aufweist, und wobei das Piezoelement abschnittsweise eine zweite Dicke aufweist,
wobei eine Seitenfläche (11.101) des Piezoelements eben ist und mit der ersten Seitenfläche des Koppelkörpers akustisch gekoppelt ist,
wobei das Piezoelement (11.1) in einem Zentralbereich (11.102) eine Vertiefung aufweist.

2. Ultraschallsensor nach Anspruch 1,
wobei das mindestens eine Piezoelement (11.1) einen Piezoamplitudengang aufweist,
welcher Piezoamplitudengang aus zumindest zwei teilweise überlappenden Teilamplitudengängen (30) zusammengesetzt ist, welche Teilamplitudengänge jeweils eine Bandbreite (31) bemessen durch eine Halbwertsbreite sowie eine Zentralfrequenz (32) aufweisen,
wobei unterschiedliche benachbarte Frequenzbereiche bezüglich ihrer Zentralfrequenzen (32) einen Maximalabstand von einem Mittelwert ihrer Bandbreiten multipliziert mit einem Faktor F aufweisen,
wobei F höchstens 2, und wobei F insbesondere höchstens 1.

3. Ultraschallsensor nach Anspruch 1 oder 2,
wobei die Teilamplitudengänge zu jeweils unterschiedlichen Elektrodenpaaren gehören.

4. Ultraschall-Messgerät (1) zum Messen mindestens einer Messgröße umfassend:
Zumindest einen Ultraschallsensor (10) nach einem der vorigen Ansprüche,
eine elektronische Mess-/Betriebsschaltung (20) zum Betreiben des mindestens einen Ultraschallsensors sowie zum Bereitstellen von Messwerten der mindestens einen Messgröße.
